# EUROPÄISCHE PATENTSCHRIFT

(11) **EP 0 208 369 B1**
(45) Veröffentlichungstag und Bekanntmachung des Hinweises auf die Patenterteilung: **26.05.1993**
(21) Anmeldenummer: 86201133.5
(22) Anmeldetag: 27.06.1986
(51) Int. Cl.: H05K 7/20, C09K 5/06, A45D 20/12

(54) **Kühlanordnung für wärmeabgebende elektrische Bauteile**
Cooling device for heat dissipating electrical components
Dispositif de refroidissement pour composants électriques dissipant de la chaleur

(30) Priorität: 06.07.1985 DE 3524242
(43) Veröffentlichungstag der Anmeldung: 14.01.1987
(73) Patentinhaber: Philips Patentverwaltung GmbH, 22335 Hamburg (DE); Philips Electronics N.V., 5621 BA Eindhoven (NL)
(72) Erfinder: Schröder, Johann, Dr., D-5100 Aachen (DE); Gawron, Klaus, D-5100 Aachen (DE); Bertram, Leo, D-5190 Stolberg (DE); Schemmann, Hugo, Dr., Schaesberg (NL)
(74) Vertreter: Koch, Ingo

(56) Entgegenhaltungen:
- DE-A- 3 020 984
- DE-A- 3 201 314
- DE-A- 3 208 254
- US-A- 3 565 167
- US-A- 3 780 356

## Beschreibung

Die Erfindung betrifft eine Kühlanordnung für wärmeabgebende elektrische Bauteile mit einem Latentwärmespeicher.

Wie elektrische Widerstände so können auch andere elektrische Bauteile, z.B. Dioden, Transistoren und Thyristoren, aber auch Elektromotoren, bei Stromdurchgang eine mehr oder weniger starke Erwärmung erfahren. Bei entsprechend hoher Belastung kann dies zu einer Temperatursteigerung führen, die eine vorzeitige Alterung und Zerstörung der Bauteile zur Folge hat. Es muß also gewährleistet werden, daß die Wärmeabgabe vom Bauteil an die Umgebung groß genug ist, um die durch elektrische Verluste entstehende Wärme (nachstehend als Verlustwärme bezeichnet) abzuführen und kritische Temperaturerhöhungen zu vermeiden.

Aus der DE-C3-2 003 393, der AT-A-310 811 und der US-A-4 057 101 ist es bekannt, elektrische Bauteile auf einer für ihre Funktion optimalen Temperatur zu halten oder vor zeitlich begrenzter thermischer Überbelastung zu schützen, indem man sie in direkten thermischen Kontakt mit einem Latentwärmespeicher bringt, der andererseits in direktem thermischem Kontakt mit Kühlflügeln oder Radiatoren steht. Eine Anordnung der eingangsgenannten Art ist aus der US-A-3 565 167 bekannt. Dabei dient der Latentwärmespeicher bei unmittelbarem Kontakt zur Kühlung eines wärmeerzengenden Bauteils.

Es gibt aber auch Fälle, bei denen das elektrische Bauteil, in dem die Verlustwärme erzeugt wird, die auftretenden Temperaturen ohne Schaden vertragen kann oder durch diese Temperaturen sogar in seiner Funktion verbessert wird, hingegen die das Bauteil umgebenden Bauteile vor einer Erhitzung über eine bestimmte Temperatur hinaus geschützt werden müssen. Zu den zu schützenden Bauteilen gehören z.B. andere elektrische Bauteile, wie Kondensatoren, aber auch mechanische Bauteile, wie Antriebswellen, oder Konstruktionsteile, z.B. Gehäuse von Elektrogeräten.

Aufgabe der Erfindung ist es nun, nicht nur das wärmeabgebende elektrische Bauteil selbst, sondern auch und in erster Linie die das wärmeabgebende Bauteil umgebenden Bauteile vor Überhitzung zu schützen.

Diese Aufgabe wird erfindungsgemäß durch die im Anspruch 1 angegebenen Merkmale gelöst.

Die Erfindung beruht demnach auf dem Gedanken, zwischen dem wärmeabgebenden Bauteil und den dieses umgebenden Bauteilen thermisch von diesen isoliert einen Latentwärmespeicher anzuordnen, dessen Schmelztemperatur zwischen der Temperatur des wärmeabgebenden Bauteils und der maximal zulässigen Temperatur der zu schützenden Bauteile liegt. Dabei sollen Schmelzpunkt und Isolation so bemessen sein, daß der Temperaturgradient von heißem elektrischem Bauteil zum Speicher grundsätzlich größer ist als der Temperaturgradient vom Speicher zu den zu schützenden Teilen.

Der Latentwärmespeicher nimmt den überschüssigen Teil der Verlustwärme als Schmelzenthalpie auf, indem das Latentwärmespeichermittel aufgeschmolzen wird. Die Temperatur wird also auf den Schmelzpunkt des Latentwärmespeichermittels begrenzt. Es soll also ein Speichermittel ausgewählt werden, das eine möglichst hohe Schmelzenthalpie pro Gewichts- und Volumeneinheit und einen zur erforderlichen Temperaturbegrenzung passenden Schmelzpunkt besitzt. Salzhydrate oder Hydroxidhydrate sind hierfür z.B. besonders gut geeignet.

Die Menge an Speichermittel muß so bemessen sein, daß die Speicherkapazität für die maximal auftretende Verlustwärme ausreicht. In den Betriebspausen oder Zeiten geringer thermischer Last wird die vom Speicher aufgenommene Wärme an die Umgebung abgegeben.

Aus konstruktiven Gründen ist es in manchen Fällen zweckmäßig, den Latentwärmespeicher in mehrere Teile aufzugliedern.

Aus denselben Gründen ist es in demselben oder anderen Fällen zweckmäßig, den Latentwärmespeicher nur zwischen einem Teil des wärmeabgebenden Bauteils und/oder nur einem Teil des vor Überhitzung zu schützenden Bauteils anzuordnen. In diesen Fällen ist es vorteilhaft, zwischen den beiden thermischen Isolationen an denjenigen Stellen, an denen kein Latentwärmespeicher vorhanden ist, Wärmeleiteinrichtungen anzuordnen, die mit dem Latentwärmespeicher in thermischem Kontakt stehen.

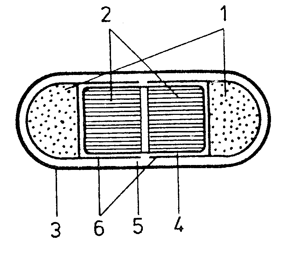

Ein Ausführungsbeispiel der Erfindung ist in einer Zeichnung dargestellt und wird im folgenden näher erläutert. Die einzige Fig. der Zeichnung zeigt ein Elektro-Rasiergerät in schematischer Darstellung.

Das Elektro-Rasiergerät ist sehr gut dazu geeignet, die einfache und wirkungsvolle Kühlanordnung nach der Erfindung an einem praktischen Beispiel zu veranschaulichen, da es normalerweise in kurzzeitigen Arbeitsphasen mit relativ langen zwischenzeitlichen Ruhephasen betrieben wird. Außerdem soll es möglichst leicht, klein und handlich sein. Als Antrieb ist darum ein leistungsfähiger Synchronmotor besonders gut geeignet.

Trotz des relativ hohen Wirkungsgrades hat ein derartiger Synchronmotor doch noch eine Verlustleistung von 5 bis 10 W, die, in Wärme umgesetzt, den Motor unter den in einem kleinen Rasiergerätegehäuse gegebenen thermischen Bedingungen auf Temperaturen von etwa 100 bis 140°C aufheizt. Für den Motor sind solche Temperaturen zwar unkritisch. Da aber, wie gefordert, die Oberfläche des Gehäuses und der Wandabstand zum Motor relativ klein sind, würde die Gehäusewand durch den heißen Motor auf Temperaturen über 40°C aufgeheizt, was natürlich nicht akzeptabel ist, da es für die Hände sehr unangenehm sein würde.

Zur Kühlung der Gehäusewand könnte man in die Wand einen flachen Latentwärmespeicher integrieren. Damit die Wand nicht heißer als 40°C werden kann, müßte in diesem Falle das Speichermittel einen Schmelzpunkt unter 40°C besitzen. Der gravierende Nachteil einer so nah an Umgebungstemperatur gelegenen Schmelztemperatur ist der, daß die Regenerierungszeit, d.h. die Zeit, in der die aufgenommene Wärme wieder an die Umgebung abgegeben wird, sehr lang ist, und daß an heißen Sommertagen die Regenerierung überhaupt nicht erfolgen kann.

Andererseits könnte man bekanntlich den Motor kühlen und seine Temperatur herabsetzen, indem man ihn in direkten, thermischen Kontakt mit einem Latentwärmespeicher bringt. Ein Nachteil der Erniedrigung der Motortemperatur ist aber der, daß man im gleichen Verhältnis auch die Wärmekapazität herabsetzt. Außerdem ist bei zu langer Betriebszeit und dadurch bedingter Überladung des Speichers die Gefahr gegeben, daß Motor- und damit auch Speichertemperatur über 140°C ansteigen. Bei der wegen der hohen Schmelzwärme bevorzugten Verwendung von Salzhydraten oder Hydroxidhydraten als Speichermittel würden so Zersetzungsdrücke über Atmosphärendruck auftreten können, die das Speichergefäß zerstören würden.

Sehr viel besser und zuverlässiger sowohl bezüglich der Temperaturbegrenzung der Gehäusewand unter 40°C als auch bezüglich einer möglichst kurzen Regenerierungszeit ist es darum, nach der vorliegenden Erfindung wie folgt und in der Fig. dargestellt zu verfahren:
Ein Latentwärmespeicher 1 ist mit einem Speichermittel gefüllt, dessen Schmelzpunkt T zwischen der Betriebstemperatur eines Motors 2 und der maximal zulässigen Wandtemperatur eines Gehäuses 3 (40°C) liegt. Der Speicher 1 wird dann zwischen Motor 2 und Gehäusewand 3 angebracht, und zwar thermisch von beiden derart isoliert, daß der Temperaturgradient ΔT/d und damit der Wärmestrom in einer dem Motor zugewandten Isolierschicht 4 stets größer ist als in einer dem Gehäuse zugewandten Isolierschicht 5. Auf diese Weise fließt also die Wärme vom Motor zunächst mit hoher Stromdichte zum Speicher, um dort bei konstanter Schmelztemperatur akkumuliert und damit mit geringerer Stromdichte, d.h. über längere Zeit, schließlich an die Gehäusewand und weiter an die Umgebungsluft abgegeben zu werden. Die Gehäusewand wird so thermisch geringer belastet und ihre Temperatur bleibt unter der geforderten Grenze von 40°C.

Die Gehäusewand 3 besteht aus Kunststoff oder Metall. Die Isolierschichten 4 und 5 bestehen z.B. aus Luft. Die Wandung des Latentwärmespeichers 1 besteht z.B. aus Kunststoff oder aus metallischen Werkstoffen, die gegen das Speichermittel chemisch resistent sind, wie z.B. Nickel oder Chromnickelstähle.

Damit das Rasiergerät möglichst flach gehalten werden kann, sind in diesem Beispiel zwei Latentwärmespeicher seitlich vom Motor angeordnet. Durch Leitbleche 6 aus Aluminium oder Kupfer, die mit den Speichern in thermischem Kontakt stehen und 0,9 mm dick sind, wird die Wärme von der Ober- und Unterseite des Motors in die Speicher geleitet.

Ohne Speicher und Leitbleche stellt sich in wenigen Minuten am Motor eine Betriebstemperatur von etwa 140°C ein und bei einer isolierenden Luftschicht von 2 mm Dicke erhöht sich die Temperatur der Gehäusewand auf etwa 50°C. Der Temperaturgradient ist also 90/2 = 45 Grad/mm.

Mit Wärmespeicher und Leitblechen steigt die Motortemperatur auf fast 135°C. Der Speicher, der den Motor mit seinen Leitblechen auf 0,5 mm Abstand umgibt, ist mit Natriumazetat-trihydrat CH₃COONa . 3 H₂O gefüllt, dessen Schmelzpunkt bei 58°C liegt. Der Temperaturgradient zwischen dem Motor und den Leitblechen beträgt also etwa 75/0,5 = 150 Grad/mm und bewirkt einen sehr kräftigen Wärmestrom zum Speicher, der diesen als Schmelzwärme latent aufnimmt und dabei seine Temperatur bei 58°C konstant hält, bis alles Salz geschmolzen ist. Zwischen den Leitblechen und der 1,5 mm entfernten Gehäusewand beträgt der Temperaturgradient folglich nur etwa 30/1,5 = 20 Grad/mm. Es fließt also nur relativ wenig Wärme zur Wand, deren Temperatur darum mit etwa 30°C deutlich unter der geforderten Grenze von 40°C bleibt.

Als Speichermittel sind z.B. für diesen speziellen Zweck neben
CH₃COONa.3 H₂O Schmelzpkt. 58°C,Schmelzwärme 289kJ/dm³
auch
NaOH.H₂O eutekt. Schmelzpkt. 61°C,Schmelzwärme 336kJ/dm³
NaOH.H₂O kongr. Schmelzpkt. 64°C,Schmelzwärme 378kJ/dm³
CaCl₂.6 H₂O Schmelzpkt. 30°C,Schmelzwärme 284kJ/dm³
geeignet.

Die erfindungsgemäße Kühlanordnung ist nicht nur in Elektro-Rasiergeräte, sondern auch in andere Elektrogeräte, z.B. Staubsauger, Küchenmaschinen oder Scheibenwischerantriebe, einbaubar.

## Patentansprüche

1. Kühlanordnung für ein wärmeabgebendes elektrisches Bauteil mit einem Latentwärmespeicher (1), welcher
zwischen dem wärmeabgebenden Bauteil (2) oder einem Teil desselben und einem vor Überhitzung zu schützenden Bauteil (3) oder einem Teil desselben angeordnet ist, und ein Latentwärmespeichermittel enthält, dessen Schmelzpunkt T zwischen der Betriebstemperatur des wärmeabgebenden Bauteils (2) und der höchstzulässigen Temperatur des zu schützenden Bauteils (3) liegt und dessen Menge derart bemessen ist, daß die Speicherkapazität des Latentwärmespeichers (1) für die maximal vom wärmeabgebenden Bauteil (2) abzugebende Wärmemenge ausreicht, dadurch gekennzeichnet, daß zwischen dem wärmeabgebenden Bauteil (2) und dem Latentwärmespeicher (1) einerseits und zwischen dem Latentwärmespeicher (1) und dem zu schützenden Bauteil (3) andererseits je eine thermische Isolation (4, 5) angeordnet ist und daß der Schmelzpunkt T des Latentwärmespeichermittels und die Dicken d der Isolationen (4, 5) derart bemessen sind, daß der Wärmestrom von dem auf Betriebstemperatur befindlichen wärmeabgebenden Bauteil (2) zum Latentwärmespeicher (1) größer als der Wärmestrom vom Latentwärmespeicher (1) zum zu schützenden Bauteil (3) ist.

2. Kühlanordnung nach Anspruch 1,
dadurch gekennzeichnet, daß der Latentwärmespeicher (1) ein Salzhydrat oder ein Hydroxidhydrat als Latentwärmespeichermittel enthält.

3. Kühlanordnung nach Anspruch 1 oder 2,
dadurch gekennzeichnet, daß der Latentwärmespeicher (1) in mehrere Teile aufgegliedert ist.

4. Kühlanordnung nach Anspruch 1, 2 und/oder 3, wobei der Latentwärmespeicher zwischen einem Teil des wärmeabgebenden Bauteils und/oder einem Teil des vor Überhitzung zu schützenden Bauteils angeordnet ist,
dadurch gekennzeichnet,
daß zwischen den beiden thermischen Isolationen (4, 5) an denjenigen Stellen, an denen kein Latentwärmespeicher vorhanden ist, Wärmeleiteinrichtungen (6) angeordnet sind, die mit dem Latentwärmespeicher (1) in thermischem Kontakt stehen.

5. Kühlanordnung nach einem oder mehreren der Ansprüche 1 bis 4,
dadurch gekennzeichnet, daß sie in ein Elektrogerät eingebaut ist, wobei das wärmeabgebende Bauteil (2) ein Elektromotor und das vor Überhitzung zu schützende Bauteil (3) eine Gehäusewand ist.

6. Kühlanordnung nach Anspruch 5,
dadurch gekennzeichnet, daß sie in ein Elektro-Rasiergerät eingebaut ist.

7. Kühlanordnung nach Anspruch 6,
dadurch gekennzeichnet, daß sie als Latentwärmespeichermittel
CH₃COONa . 3 H₂O oder
NaOH . H₂O eutekt. oder kongr. oder
CaCl₂ . 6 H₂O
enthält.

## Claims

1. A cooling arrangement for a heat-emitting electric component having a latent heat store (1), which is provided between the heat-emitting component (2) or a part thereof and a component (3) or a part thereof to be protected from overheating, and which latent heat store (1) comprises a latent heat storing agent whose melting-point T is between the operating temperature of the heat-emitting component (2) and the maximum permissible temperature of the component (3) to be protected and whose quantity is proportioned to be so that the storage capacity of the latent heat store (1) is sufficient for the amount of heat which can maximally be emitted by the heat-emitting component (2), characterized in that between the heat-emitting component (2) and the latent heat store (1) on the one hand and between the latent heat store (1) and the component (3) to be protected on the other hand a thermal insulation (4, 5) is provided and that the melting-point T of the latent heat storing agent and the thicknesses d of the insulations (4, 5) are proportioned so that the heat flow from the heat-emitting component (2) which is at the operating temperature to the latent heat store (1) is greater that the heat flow from the latent heat store (1) to the component (3) to be protected.

2. A cooling arrangement as claimed in Claim 1, characterized in that the latent heat store (1) comprises a salt hydrate or a hydroxide hydrate as a latent heat storing agent.

3. A cooling arrangement as claimed in Claim 1 or 2, characterized in that the latent heat store (1) is composed of several parts.

4. A cooling arrangement as claimed in Claim 1, 2 and/or 3, in which the latent heat store is provided between a part of the heat-emitting component and/or a part of the component to be protected from overheating, characterized in that heat-conducting devices (6) which are in thermal contact with the latent heat store (1) are provided between the two thermal insulations (4, 5) in those places in which no latent heat store is present.

5. A cooling arrangement as claimed in one or more of the Claims 1 to 4, characterized in that it is incorporated in an electric apparatus in which the heat-emitting component (2) is an electric motor and the component (3) to be protected from overheating is a wail of a housing.

6. A cooling arrangement as claimed in Claim 5, characterized in that it is incorporated in an electric shaver.

7. A cooling arrangement as claimed in Claim 6, characterized in that it comprises
CH₃COONa.3H₂O or
NaOH.H₂O eutect. or congr., or
CaCl₂.6H₂O
as a latent heat storing agent.

## Revendications

1. Dispositif de refroidissement pour des composants électriques dissipant de la chaleur muni d'un accumulateur de chaleur latente (1) qui est disposé entre le composant dissipant de la chaleur (2) ou une partie de ce dernier et un composant (3) à protéger contre la surchauffe ou une partie de ce dernier et qui contient un moyen d'accumulation de chaleur latente, dont le point de fusion T se situe entre la température de fonctionnement du composant dissipant de la chaleur (2) et la température admissible au maximum du composant (3) à protéger et dont la quantité est choisie de façon que la capacité d'accumulation de l'accumulateur de chaleur latente (1) soit suffisante pour la quantité de chaleur dégagée au maximum par le composant dissipant de la chaleur (2), caractérisé en ce qu'entre le composant dissipant de la chaleur (2) et l'accumulateur de chaleur latente (1) d'un côté et entre l'accumulateur de chaleur latente (1) et le composant à composer (3) de l'autre côté est disposé chaque fois un isolement thermique (4, 5) et en ce que le point de tusion T du moyen d'accumulation de chaleur latente et l'épaisseur des isolements (4, 5) est choisi de façon que le flux de chaleur circulant à partir du composant dissipant de la chaleur (2) présentant la température de fonctionnement vers l'accumulateur de chaleur latente (1) soit supérieur au flux de chaleur circulant à partir de l'accumulateur de chaleur latente (1) vers le composant à protéger (3).

2. Dispositif de refroidissement selon la revendication 1, caractérisé en ce que l'accumulateur de chaleur latente (1) contient un hydrate salin ou un hydrate d'hydroxyde comme moyen d'accumulation de chaleur latente.

3. Dispositif de refroidissement selon la revendication 1 ou 2, caractérisé en ce que l'accumulateur de chaleur latente (1) est divisé en plusieurs parties.

4. Dispositif de refroidissement selon la revendication 1, 2 et/ou 3, dans lequel l'accumulateur de chaleur latente est disposé entre une partie du composant dissipant de la chaleur et/ou une partie du composant à protéger contre la surchauffe, caractérisé en ce que des dispositifs conducteurs de chaleur (6) sont disposés entre les deux isolements thermiques (4, 5) aux endroits où un accumulateur de chaleur latente n'est pas présent et sont en contact thermique avec l'accumulateur de chaleur latente (1).

5. Dispositif de refroidissement selon l'une ou plusieurs des revendications 1 à 4, caractérisé en ce qu'il est monté dans un appareil électrique, le composant dissipant de la chaleur (2) étant un moteur électrique et le composant (3) à protéger contre la surchauffe étant une paroi du boîtier.

6. Dispositif de refroidissement selon la revendication 5, caractérisé en ce qu'il est monté dans un rasoir électrique.

7. Dispositif de refroidissement selon la revendication 6, caractérisé en ce que comme moyen d'accumulation de chaleur latente il contient
CH₃COONa . 3 H₂O ou
NaOH . H₂O eutect. ou congr. ou
CaCl₂ . 6 H₂O
